# EUROPEAN PATENT SPECIFICATION

(11) **EP 0 778 741 B1**
(45) Date of publication and mention of the grant of the patent: **19.05.1999**
(21) Application number: 95930438.7
(22) Date of filing: 31.07.1995
(51) Int. Cl.: A44C 27/00, B23K 37/04

(54) **METHOD AND MACHINE FOR MANUFACTURING JEWELLERY**
VERFAHREN UND VORRICHTUNG ZUR HERSTELLUNG VON SCHMUCKWAREN
PROCEDE ET MACHINE DE FABRICATION D'ORFEVRERIE

(30) Priority: 01.08.1994 IL 11052494
(43) Date of publication of application: 18.06.1997
(73) Proprietor: Yellin, Dov, Ramot Tzahala (IL); Rapaport, Erich, 64683 Tel Aviv (IL)
(72) Inventor: Yellin, Dov, Ramot Tzahala (IL); Rapaport, Erich, 64683 Tel Aviv (IL)
(74) Representative: Viering, Jentschura & Partner
(86) International application number: EP9503046
(87) International publication number: WO9603897

(56) References cited:
- EP-A- 0 201 346
- GB-A- 2 263 858

## Description

### FIELD AND BACKGROUND OF INVENTION:

The present invention relates to a machine for manufacturing of jewellery according to the precharacterizing part of claim 1. Further, the invention relates to a method using the machine according to claim 1 for producing and connecting the two parts of a piece of jewellery.

There are known a very large variety of jewels of all kinds, however the present invention refers mainly but not exclusively to golden hollow jewellery.

Golden jewellery is manufactured either by hand or by machine as a mass production product. The machine made jewellery is usually chains or an endless variety of hollow bodies of different shapes and designs to be used as earrings or pendants.

Such bodies are manufactured of very thin gold sheet which is reliefed according to a mould. Two such identical parts are welded together forming a hollow body.

There are known two methods for welding said two parts to each other. Both methods are time consuming processes.

From GB 2 263 858 it is generally known to weld or solder two parts of a jewellery together. From EP 0 201 346 it is generally known to weld lids onto a base portion by means of a seam welding apparatus.

It is an object of the invention to provide a machine and method a mentioned at the outset, for welding two parts of a jewellery together in a more economic and more rapid way.

This is achieved by a machine according to the characterizing part of claim 1 and by the method according to claim 4. Advantageous embodiments of the invention are described in the subclaims.

The invention will now be described with reference to the annexed drawings in which:
Fig. 1 is a perspective schematic illustration of the machine.

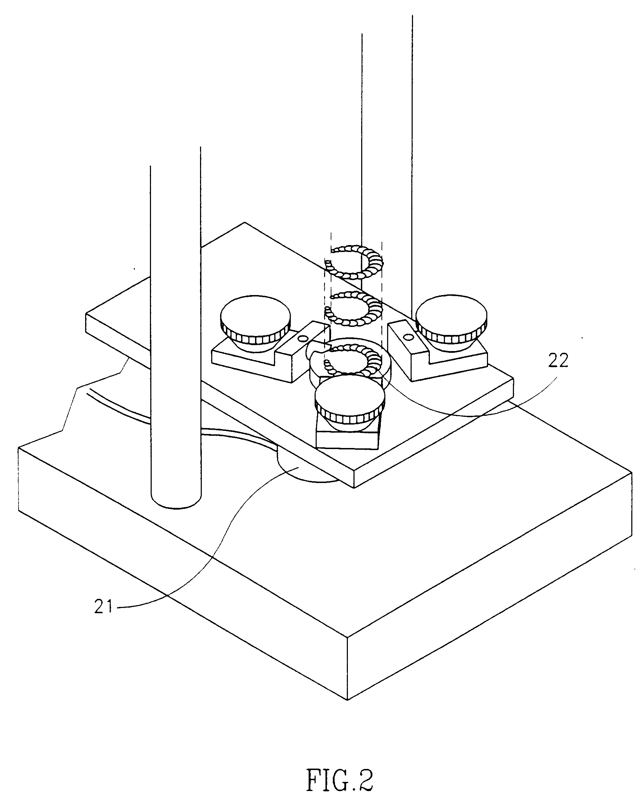

Fig. 2 is a perspective illustration of the fastening means.

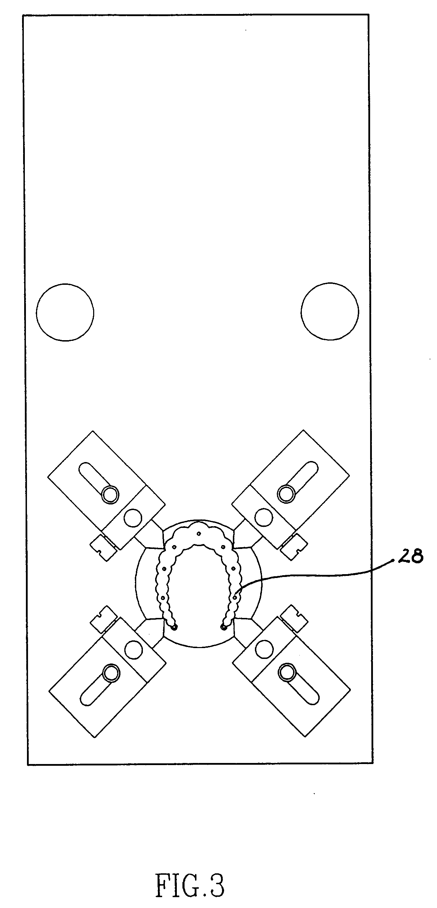

Fig. 3 is a top view of the part shown in Fig. 2.

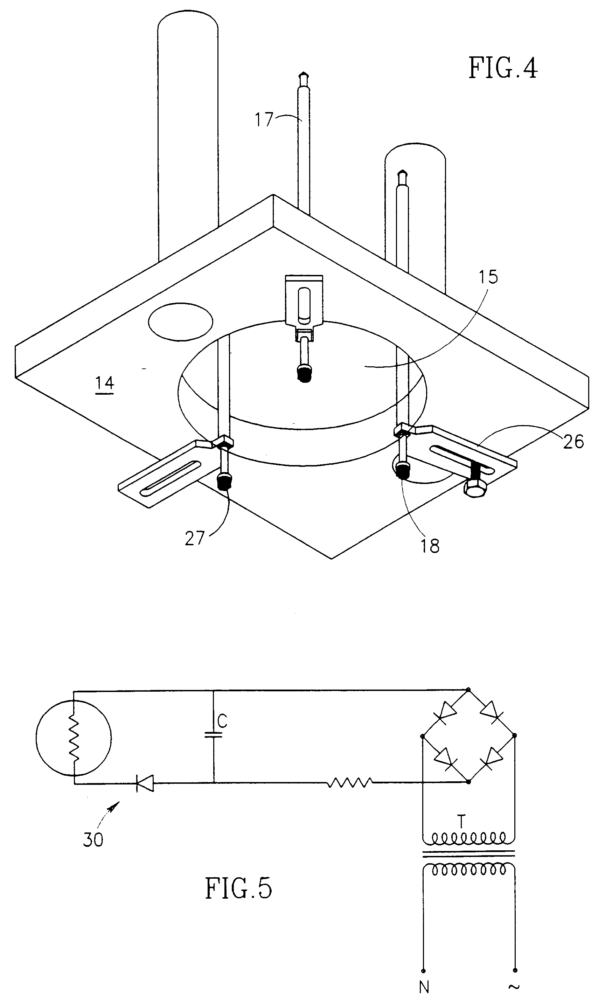

Fig. 4 is an underneath view of a part of the machine.
Fig. 5 illustrates the electronic circuit of the machine.

### DESCRIPTION OF THE INVENTION

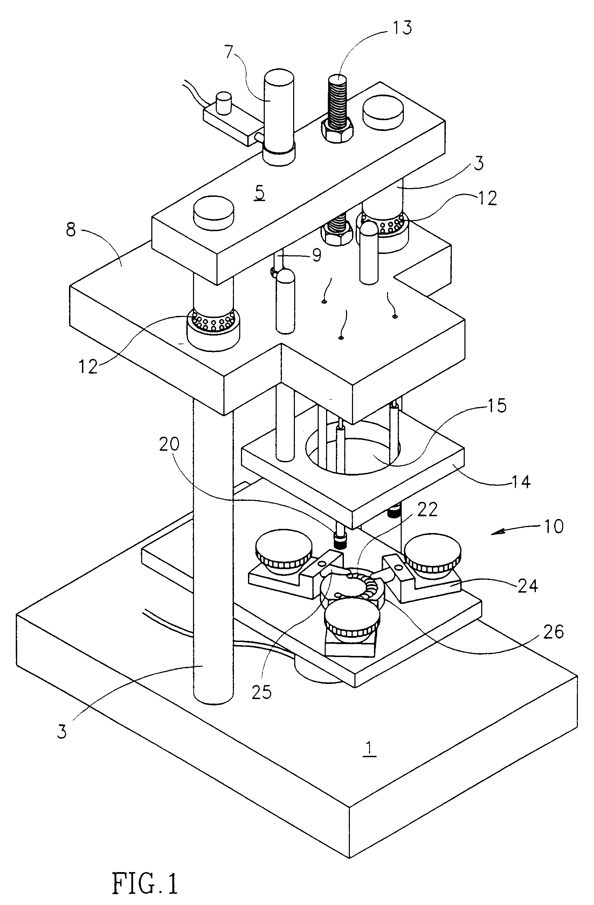

Turning first to Fig. 1 a structure having a base 1 on which are mounted two uprights 3 being interconnected at their upper free end by a bridge member 5.

A pneumatic piston 7 is mounted on said bridge 5 and connected to a plate like member 8 by means of rod 9.

Said plate like member 8 is provided with bearings 12 to enable smooth linear movement of said plate along uprights 3. The up and down movement of said plate 8 is adjusted by means of set screw 13.

Underneath plate 8 there is provided an insulated member 14 having an opening 15 and a plurality of pneumatic pistons 17 at the free end of which there is provided a brush contact 18. Said pistons 17 are mounted on an adjustable supports 26 and electrically insulated from the machine. The pressure of said pistons could be adjusted. The pistons are electrically connected to the welder and to a compressed air source.

At the lower part of the machine there is placed an assembly 10 adapted for holding the pieces of jewellery to be connected. The assembly comprises a plate 20 on top of which is mounted a copper or graphite cylindrical body 21 at the upper surface of which there is a recess 22 which corresponds to the shape of the parts to be connected. This recess is being made by means of the same dye which makes the parts of the jewel, or by an E.D.M. machine.

It is within the scope of the invention to provide a universal seat for the jewel instead of the recess 22. Such seat could be an electric conductive "carpet" on which the jewel will be laid and held in position by the bristles.

At the bottom of said recess are provided small apertures 28 which are connected to a vacuum source (not seen). Round said cylinder are mounted on top of adjustable supports 24, quartz fingers 25 which are in contact with the parts to be connected.

The welding generator comprises a transformer T, a full wave rectifier and a capacitor C. The energy stored in the capacitor varies according to the mains voltage supplied by the transformer. The capacitor is discharged through the jewel to be welded and is controlled by a Triac or SCR 30.

### MODE OF OPERATION

Within the recess 22 provided in cylinder 21, one part of the jewel is placed, its open side directed upward. On top of said part the second part is place, directed downward. The lower part is secured to its position by the vacuum created thereunder. Both parts are held in position by means of Quartz fingers 24 which are adjusted in accordance with the shape and size of the jewel.

When the machine is activated, plate 8 will be lowered along with plate 14 causing brushes 18 to be in contact with the upper part of the jewellery. The discharge of the capacitors will cause immediate welding along the connecting line of the two parts of the piece of jewellery.

## Claims

1. A machine for manufacturing of jewellery comprising electric conductive means as first securing means for securing one part of the jewel in position and electric conductive means as second securing means for securing the second part of the jewel on top of the said first part of the jewel and an electric welding generator to perform the welding, characterized in that said welding generator comprises in combination a transformer (T), a full wave rectifier and capacitors (c), the energy stored in said capacitors (c) is being discharged by a Triac or SCR (30), and said second securing means comprises a plurality of adjustable pneumatic pistons (17) provided with brush contacts (18) at their free ends.

2. The machine as claimed in claim 1, characterized in that said first securing means comprises a seat for the jewel and a plurality of adjustable conductive contacts adopted to center said jewel.

3. A method of using the machine according to claim 1 for producing and connecting the two parts of a piece of jewellery, comprising the steps:
a. obtaining a thin gold sheet,
b. relieving or stamping the sheet,
c. cutting off the edges of the relief,
d. placing the one part in a recess adopted therefore in the machine,
e. placing a second part thereon,
f. lowering the welder to bring brush contacts into contact with the upper part of the piece of jewellery,
g. activating the welding generator by discharging energy stored in a capacitor,
h. releasing the connected jewellery.

## Patentansprüche

1. Vorrichtung zum Herstellen von Schmuckstücken, mit einer elektrisch leitenden Einrichtung als erste Halteeinrichtung, mit der sich ein Teil des Schmuckstücks in richtiger Lage festlegen läßt, und einer elektrisch leitenden Einrichtung als zweite Halteeinrichtung, mit der sich der zweite Teil des Schmuckstücks auf dem ersten Teil des Schmuckstücks festlegen läßt, und einem Elektroschweißgenerator, mit dem die Schweißung ausführbar ist, dadurch gekennzeichnet, daß der Schweißgenerator eine Kombination aus einem Transformator (T), einem Vollweggleichrichter und Kondensatoren (C) aufweist, die in den Kondensatoren (C) gespeicherte Energie über einen Doppelwegthyristor oder Siliziumthyristor (30) abgegeben wird, und die zweite Halteeinrichtung eine Mehrzahl einstellbarer Druckluftkolben (17) aufweist, die an ihrem freien Ende jeweils mit einem Bürstenkontakt (18) versehen sind.

2. Vorrichtung nach Anspruch 1, dadurch gekennzeichnet, daß die erste Halteeinrichtung eine Aufnahme für das Schmuckstück und eine Mehrzahl einstellbarer leitender Kontakte aufweist, die so ausgelegt sind, daß sich das Schmuckstück mit ihrer Hilfe zentrieren läßt.

3. Verfahren, bei dem die Vorrichtung nach Anspruch 1 zum Herstellen und Verbinden der zwei Teile eines Schmuckstücks verwendet wird, mit den Schritten
a. Bereitstellen eines dünnen Goldblechs,
b. Formen oder Prägen des Blechs,
c. Abschneiden der Ränder des Formlings,
d. Positionieren des einen Teils in einer dafür ausgelegten Aussparung in der Vorrichtung,
e. Positionieren eines zweiten Teils auf dem ersten,
f. Absenken des Schweißers, so daß die Bürstenkontakte in Kontakt mit dem oberen Teil des Schmuckstücks gelangen,
g. Aktivieren des Schweißgenerators durch Abgeben der in einem Kondensator gespeicherten Energie, und
h. Freigeben des verbundenen Schmuckstücks.

## Revendications

1. Machine pour fabriquer un produit d'orfèvrerie, la machine comportant un premier moyen de fixation conducteur électrique pour maintenir en position une première partie du produit, un deuxième moyen de fixation conducteur électrique pour maintenir la deuxième partie du produit sur ladite première partie du produit, et un générateur de soudage électrique pour effectuer le soudage, la machine étant caractérisée en ce que le générateur de soudage comprend, en combinaison, un transformateur (T), un redresseur à pleine onde, et des condensateurs (C), l'énergie emmagasinée dans les condensateurs (C) étant déchargée par un triac ou thyristor (30), et en ce que le deuxième moyen de fixation comprend une pluralité de pistons pneumatiques ajustables (17) munis de contacts à balai (18) à leurs extrémités libres.

2. La machine selon la revendication 1, caractérisée en ce que le première moyen de fixation comprend un logement pour le produit d'orfèvrerie, et une pluralité de contacts conducteurs ajustables agencés pour centrer le produit.

3. Procédé d'usage de la machine selon la revendication 1 pour produire et joindre les deux parties d'un produit d'orfèvrerie, le procédé comportant les étapes suivantes:
a. on obtient une fine feuille d'or,
b. on met la feuille en relief, ou on la frappe,
c. on coupe et enlève les bords du relief,
d. on place la première partie du produit dans un logement agencé, dans la machine, pour cette partie,
e. on place une deuxième partie du produit sur la première partie,
f. on fait descendre le moyen de soudage pour mettre les contacts à balai en contact avec la partie supérieure du produit d'orfèvrerie,
g. on actionne le générateur de soudage en déchargeant de l'énergie emmagasinée dans un condensateur,
h. on lâche le produit d'orfèvrerie dont les deux parties viennent d'être jointes l'une à l'autre.
